# EUROPEAN PATENT SPECIFICATION

(11) **EP 2 626 241 B1**
(45) Date of publication and mention of the grant of the patent: **08.04.2015**
(21) Application number: 12154685.7
(22) Date of filing: 09.02.2012
(51) Int. Cl.: B60P 1/64, B60P 7/13

(54) **A container handling device and a vehicle**
Vorrichtung zur Handhabung eines Containers und Fahrzeug
Dispositif de manipulation de récipient et véhicule

(43) Date of publication of application: 14.08.2013
(73) Proprietor: Hyva Holding BV, 2400 AH Alphen aan de Rijn (NL)
(72) Inventor: Van der Heide, Rolf, 2441 AS NIEUWVEEN (NL)
(74) Representative: McCartney, Jonathan William

(56) References cited:
- WO-A1-99/05002
- DE-A1- 1 580 351
- DE-A1-102007 039 780
- DE-U1- 20 015 908
- GB-A- 2 461 273
- US-A- 6 068 440

## Description

The present invention pertains to a container handling device according to the preamble of claim 1.

Such a device is known. In normal use, when the container handling device is applied to a vehicle, the vehicle drives to a site where a container is loaded with waste or the like. The filled container is put onto the vehicle by means of the container handling device. Subsequently, the vehicle is driven to another site for emptying the container by means of tipping the container. The container stays on the vehicle and the emptied container can be taken to another site where it is displaced from the vehicle onto the ground for re-loading the container.

In the known device a hydraulic cylinder moves the container clamp to a position whereby the container is fixed on the tipping frame. In this position of the container clamp activating the container drive would result in damage to the clamp or the container. On the other hand, during transport or upon activating the tipping drive when the container clamp is in a position wherein it does not fix the container on the tipping frame could lead to dangerous situations whereby the container could fall off the tipping frame. It is clear that monitoring the position of the container clamp is important for the safe use of the device. In the known device a sensor located adjacent to the container clamp monitors its position by detecting the position of a bracket mounted on the container clamp. Prior to use, the position of the bracket and the sensor have to be adjusted for proper functioning. During use in the rough environment wherefore this equipment is intended, the relative position of the bracket and the sensor changes through deformations and the position of the sensor must be monitored and adjusted to ensure proper functioning and to avoid dangerous situations. This is undesirable. A further container handling device is known from US6068440

It is an object of the present invention to provide an improved container handling device.

This is achieved by the feature as defined in the characterizing part of claim 1. In this way, the relative position of the notch and ridge of the clamp and the sensor is defined clearly and is not influenced by rough handling. In case the rail comprises the sensor, its position at the rail is also defined after assembling the container handling device on a vehicle, which makes post-adjustment afterwards unnecessary. The sensor can be incorporated in the opening, for example.

An embodiment of the container handling device is according to claim 2. In practice a container has parallel longitudinal frame beams which can rest on the sub frame and/or on the tipping frame. When the container has to be tipped with respect to the sub frame both container clamps serve to attach the frame beams to the tipping frame.

An embodiment of the container handling device is according to claim 3. The way in which the rail encloses the clamp body allows the clamp to move only along the rail.

An embodiment of the container handling device is according to claim 4. The ridge and the notch can be used to activate a mechanical sensor in a direction transversely to the direction of movement of the container clamp.

An embodiment of the container handling device is according to claim 5. A plurality of notches and ridges allows to monitor the position of the clamps more accurately or to introduce redundancy checks.

An embodiment of the container handling device is according to claim 6. The advantage of applying a distance-detecting sensor in combination with notches and ridges is that it works independently from accumulated fouling in the notches.

An embodiment of the container handling device is according to claim 7. The presence of two attachment points provides the opportunity to reverse the clamp with respect to the rail. This improves the flexibility, for example in case of fixing containers including parallel frame beams which have different mutual distances.

An embodiment of the container handling device is according to claim 8. In practice both the container drive and the tipping drive may use common hydraulic cylinders. It is also possible that the tipping drive comprises one or more hydraulic cylinders, whereas the container drive comprises a cable system for loading and de-loading the container with respect to the tipping frame.

The invention is also related to a vehicle as defined in claim 9.

The invention will hereafter be elucidated with reference to drawings showing an embodiment of the invention very schematically.
Fig. 1 is a perspective view of an embodiment of a container handling device according to the invention.
Fig. 2 is a cross-sectional view of a tipping frame including a container, illustrating a condition in which the container is attached to the tipping frame.
Fig. 3 is a similar view as Fig. 2, but illustrating a condition in which the container is not fixed to the tipping frame.
Fig. 4 is a perspective top view of an embodiment of a container clamp.
Fig. 5 is a perspective bottom view of the embodiment Fig. 4.
Fig. 6 is a perspective view of an embodiment of a rail including clamps of which hooks are directed outwardly.
Fig. 7 is a similar view as Fig. 6, but showing a condition in which hooks face to each other.
Fig. 8 is a cross-sectional view of the embodiment of Fig. 6.

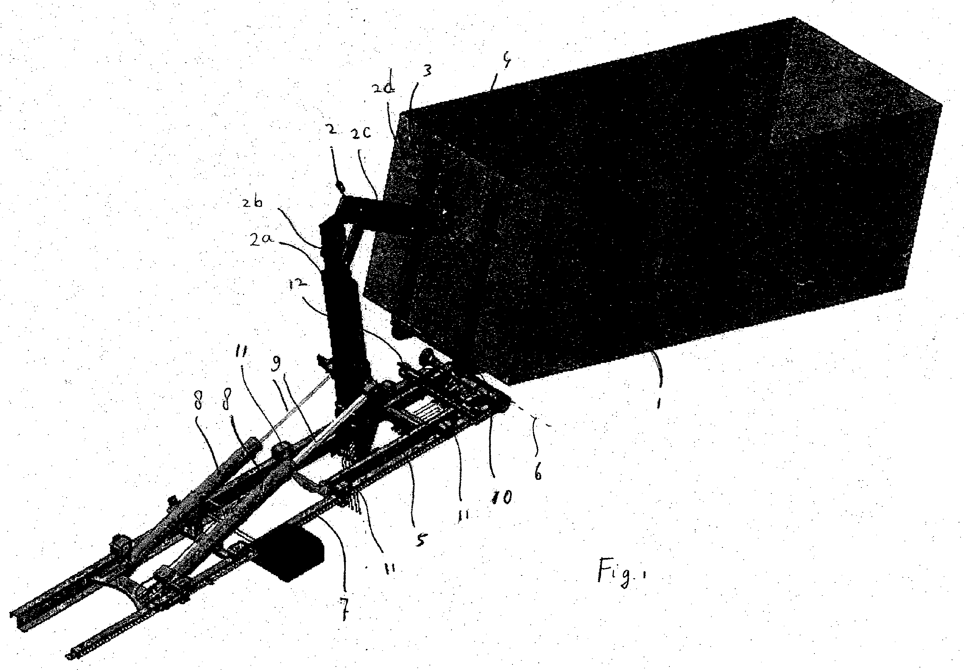

Fig. 1 shows a container handling device to be mounted on a vehicle (not shown), which device is used to load or tip a container 1. For loading the container 1 onto a vehicle, the container handling device is provided with an arm 2 having a hook 3 which latches into a handle 4 of the container 1. The arm 2 is rotatably mounted to a tipping frame 5. The tipping frame 5 is rotatable about a tipping axis 6 with respect to a sub frame 7 which is fixed to a chassis of the vehicle. The arm 2 can be locked to the tipping frame 5.

The container handling device has a container tipping condition (not shown) and a container loading/de-loading condition. In the container tipping condition the container 1 is fixed to the tipping frame 5, whereas the arm 2 is locked to the tipping frame 5. In the container loading/de-loading condition, as illustrated in Fig. 1, the arm 2 is unlocked with respect to the tipping frame 5. In this condition the container 1 can be moved and positioned on the tipping frame 5 in longitudinal direction thereof.

The container handling device is further provided with hydraulic cylinders 8 which are rotatably attached to the sub frame 7, whereas corresponding pistons 9 are rotatably attached to the arm 2. The container 1 can be displaced from the sub frame 7 onto the ground by pushing the arm 2 backwards of the vehicle through activating the hydraulic cylinders 8. The container 1 can be displaced from the ground onto the sub frame 7 in a reversed manner. As mentioned hereinbefore, in the container tipping condition the arm 2 is locked to the tipping frame 5. As a consequence, upon activating the hydraulic cylinders 8 the container 1 is tilted about the tipping axis 6.

When the container 1 is loaded on the vehicle its supporting frame 10 rests on container supports 11 which are attached to the sub frame 7. In the embodiment as shown in Fig. 1 the container supporting frame 10 comprises two longitudinal frame beams. It is important to be able to fix the container 1 to the tipping frame 5 in the container tipping condition in order to prevent the container 1 from falling from the vehicle during a tipping action. For this reason the tipping frame 5 is provided with movable clamps 12 for locking the container supporting frame 10 with respect to the tipping frame 5.

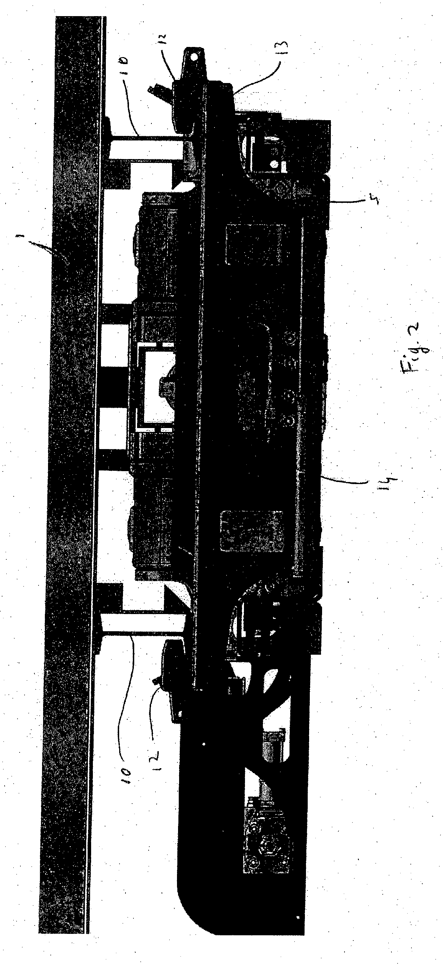

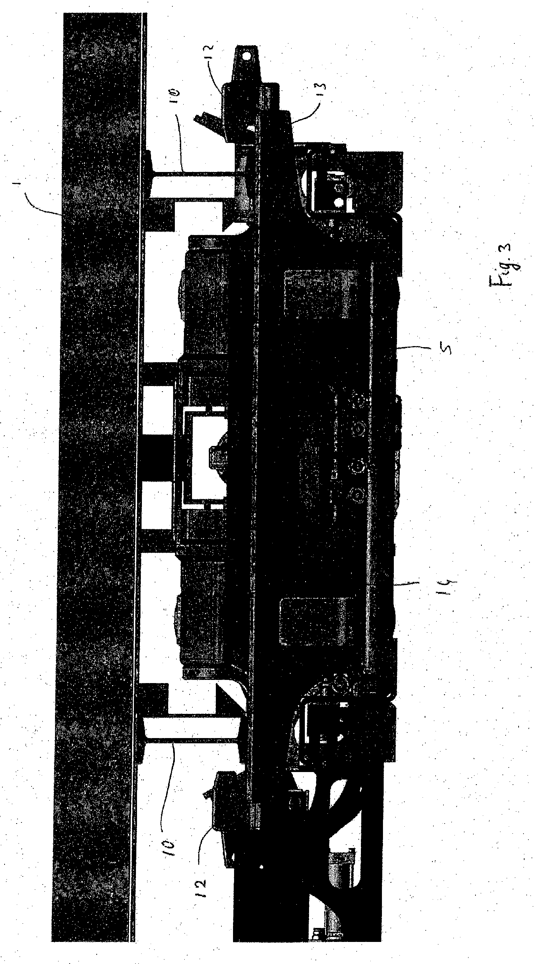

Figs. 2 and 3 show cross-sections of the vehicle according to Fig. 1 at the location where the clamps 12 are present. Fig. 2 illustrates a condition in which the container 1 is attached to the tipping frame 5. In this condition the container 1 is attached to the tipping frame 5 through the clamps 12, on the one hand, and by means of the hook 3 and the arm 2 which is now locked to the tipping frame 5, on the other hand. In this condition it is safe to start a tipping action. Fig. 3 illustrates a condition in which the clamps 12 are not engaged to the frame beams 10 of the container 1. This is typically the case in the container loading/de-loading condition. In this condition it is safe to start a de-loading action in order to displace the container 1 from the vehicle onto the ground.

In the embodiment as shown in Figs. 2 and 3 the clamps 12 are slidably mounted to a rail 13. The rail 13 extends transversely with respect to the longitudinal direction of the tipping frame 5. A clamp drive 14 is located at the rail 13 for displacing both clamps 12 inwardly to fix the container 1 to the tipping frame 5, or outwardly to unlock the container 1 with respect to the tipping frame 5. In practice, the clamp drive 14 may be a double-sided hydraulic cylinder. It is noted that in the embodiment as shown the frame beams 10 of the container 1 rest on the rail 13, which is fixed to the tipping frame 5.

Referring to Fig. 1, the arm 2 comprises four main parts: a lower arm part 2a, a first intermediate arm part 2b, a second intermediate arm part 2c and a hook part 2d which is provided with the hook 3. The first intermediate arm part 2b is translatable with respect to the lower arm part 2a in longitudinal direction thereof. The first intermediate arm part 2b and the second intermediate arm part 2c are tiltable with respect to each other. The hook part 2d is translatable with respect to the second intermediate arm part 2c in longitudinal direction thereof. When the container 1 is placed on the sub frame 7 the container 1 is supported by the lower arm part 2a and the tipping frame 5. In such a condition the first intermediate arm part 2b is translated in forward direction of the vehicle so as to locate the container 1 forwardly with respect to the tipping frame 5. Under driving conditions of the vehicle the container 1 is also supported by the container supports 11. The second intermediate arm part 2c prevents the container from moving with respect to the sub frame 7 in the direction of driving. The hook 3 avoids a lateral displacement of the front portion of the container 1, whereas the clamps 12 avoid a lateral displacement of the rear portion of the container 1 under vehicle driving conditions. Therefore, the clamps 12 are not only applied for retaining the container 1 to the tipping frame during a tipping action, but also during driving of the vehicle including the container 1.

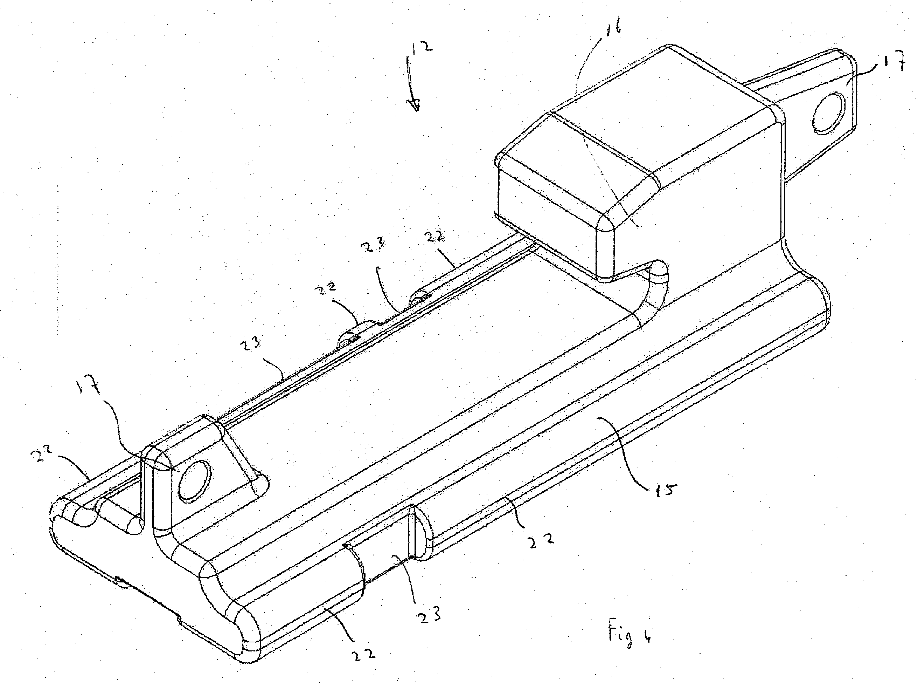

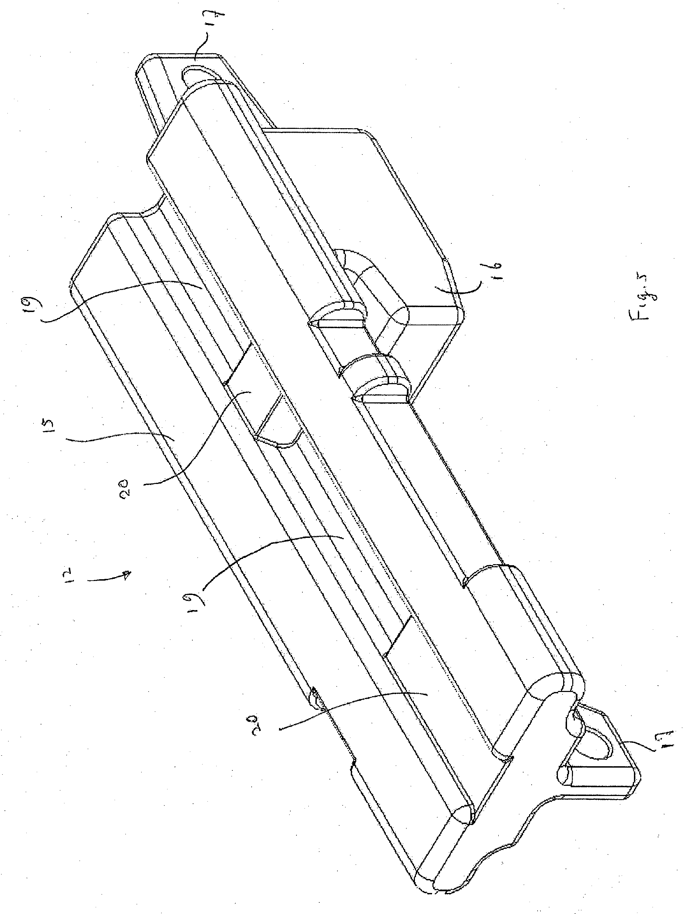

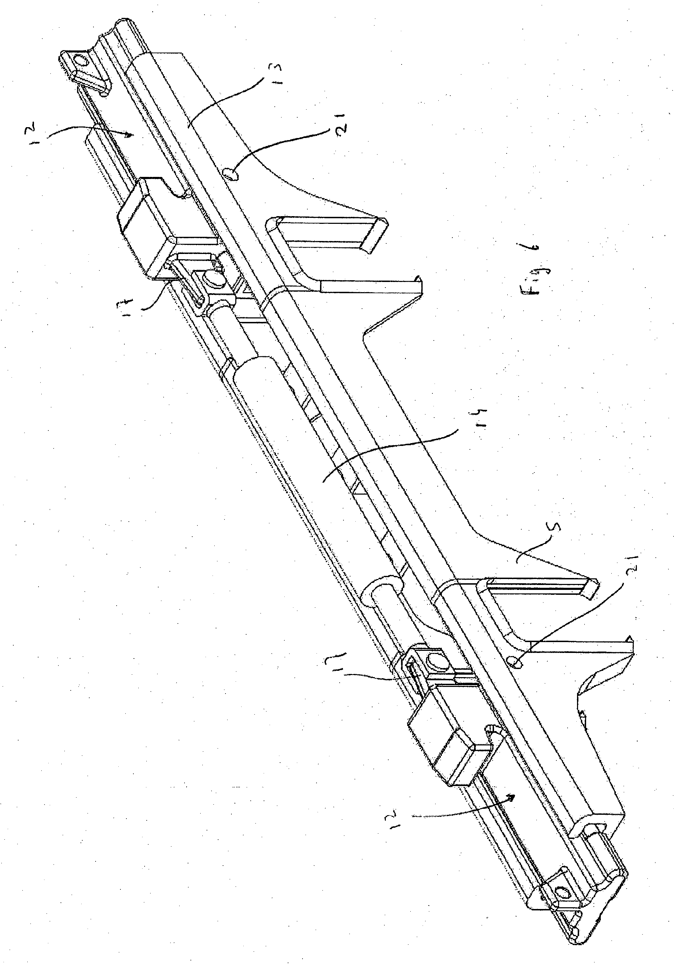

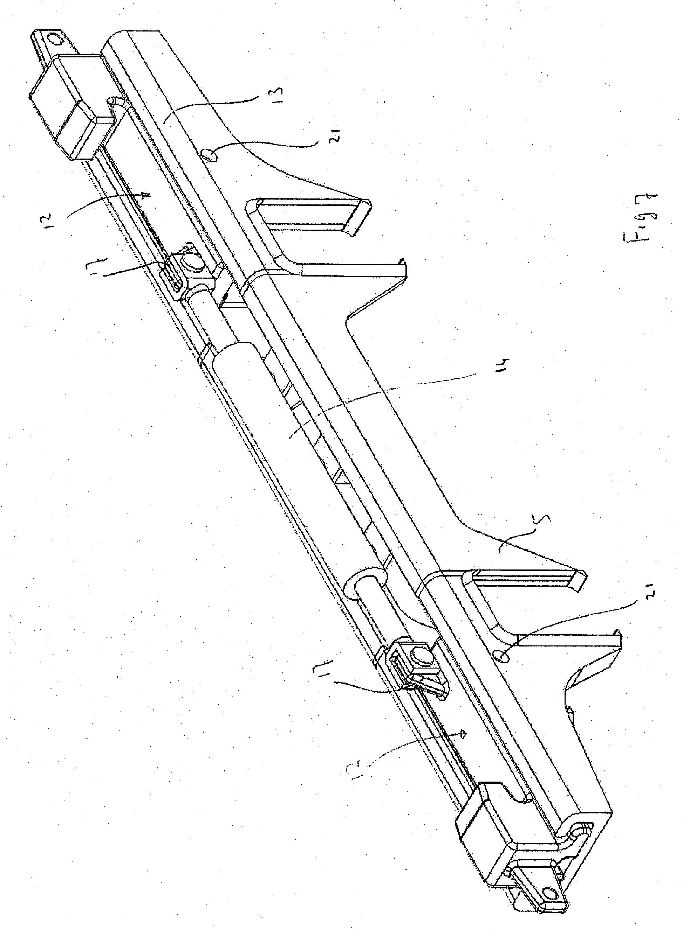

Each clamp 12 comprises a clamp body 15 and a hook 16. Fig. 4 shows an upper side of an embodiment of a clamp 12 and Fig. 5 shows its bottom side. The clamp 12 comprises two attachment points in the form of tow rings 17 disposed at opposite sides thereof. The tow rings 17 can be connected to the clamp drive 14. The embodiment as shown in Figs. 4 and 5 includes two tow rings 17 in order to be able to connect the clamp 12 to the clamp drive 14 in opposite orientations. This is illustrated in Figs. 6 and 7. The tow rings 17 are located such that upon reversing the clamp 12 it still fits to the rail 13 and can still be connected to the clamp drive 14. The possibility of reversing the clamps 12 is desired since in practice different containers 1 may have frame beams 10 that have different mutual distances.

Figs. 6 and 7 show that the rail 13 partly encloses the clamp body 15 in order to allow a movement of the clamp 12 with respect to the rail 13 in only one direction, i.e. only along the rail 13. The rail 13 encloses the clamp body 15 at opposite sides thereof as seen in longitudinal direction of the tipping frame 5, and partly on the top of the clamp body 15 on both sides of the hook 16 and at the bottom of the clamp body 15.

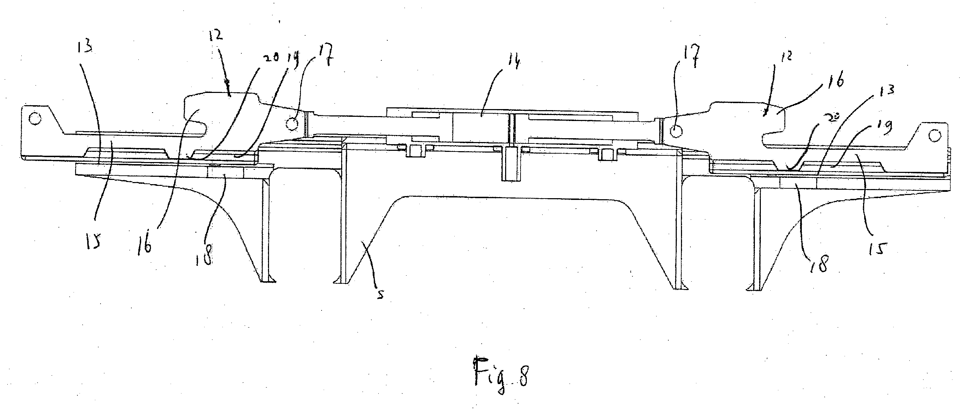

Fig. 8 shows a cross-section of the embodiment as shown in Fig. 6. For illustrative reasons the left clamp 12 is shown in a position displaced outwardly, i.e. a clamping condition, and the right clamp 12 is shown in a position displaced inwardly, i.e. a non-clamping condition.

In the embodiment as shown in Fig. 8 the bottom of the rail 13 is provided with holes 18 located at each of the clamps 12. In each of the holes 18 a sensor (not shown) is mounted. The sensor may be a mechanical sensor which automatically moves upwardly when a recess in the clamp 12 passes the hole 18. Alternatively, the sensor is an induction sensor that detects whether a metal part is present within a certain distance.

Fig. 5 shows that a lower part of the clamp 12 is provided with recesses or notches 19 which are clearly different from ridges 20. The sensor in the rail 13 can detect whether a notch 19 or ridge 20 is present above the hole 18. Referring to Fig. 8, in the position of the right clamp 12 the sensor at the hole 18 will detect a ridge 20, whereas the sensor at the left clamp 12 will detect a notch 19. In other words, the signal from the right sensor may be an indication of a de-locked container 1, and the signal from the left induction sensor may correspond to a locked container 1. This manner of detection of location of the clamps 12 appears to be very reliable and robust since adverse influence of fouling of the notches 19 is limited.

The embodiment of the rail 13 as shown in Figs. 6 and 7 also comprises holes 21 in its front side in which additional sensors can be mounted. The sensors are located such that notches 23 and ridges 22 at the front and/or back side of the clamp body 15 can be detected. The sensors in combination with the mentioned ridges 22 and notches 23 may be separate or in addition to the sensors and notches 19 and ridges 20 at the bottom side of the clamps 12 as shown in Fig. 8.

The signals from the sensors can be used to control parts of the container handling device 1, for example by directly or indirectly controlling hydraulic valves or switching indicating lights or warning lights. Furthermore, the position detection system as described hereinbefore provides the opportunity to detect automatically the orientation of the clamps 12 with respect to the rail 13, i.e. the directions of the respective hooks.

From the foregoing it will be clear that the container handling device according to the invention provides a reliable sensing system to monitor whether the container is clamped to the tipping frame.

The invention is not limited to the embodiment shown in the drawings and described hereinbefore, which may be varied in different manners within the scope of the claims. For example, it is conceivable that the container rests on the sub frame only, whereas the clamps are adapted such that they fix the container to the tipping frame. It should be noted that the openings in the rail for monitoring the positions of the clamps could be filled by fouling or deliberately, for example by a non-metallic filling element. In the latter case the opening in the rail means that it is open for the associated sensor. For example, an inductive sensor does not malfunction in case of a non-metallic element in the opening.

## Claims

1. Container handling device for a vehicle, comprising a sub frame (7), a tipping frame (5) which is rotatable with respect to the sub frame (7), a container drive (8, 9) for moving and positioning a container (1), a tipping drive (8, 9) for tipping the tipping frame (5) with respect to the sub frame (7), wherein the tipping frame (5) comprises a rail (13) extending transversely with respect to the longitudinal direction of the tipping frame (5) and a container clamp (12) for fixing a container (1) to the tipping frame (5), which clamp (12) is movable along the rail (13), **characterized in that** the clamp (12) comprises a notch (19, 23) and a ridge (20, 22) and the rail (13) comprises an opening (18) through which a sensor detects a distance to determine the proximity of the notch (19, 23) or the ridge (20, 22) when the clamp (12) is at different positions along the rail (13) so as to detect the relative position of the clamp (12) and the rail (13).

2. Container handling device according to claim 1, wherein the container clamp (12) is a first container clamp, and wherein the tipping frame (5) also comprises a second container clamp including a corresponding rail (13), for each container clamp (12) the rail (13) is mounted transverse to the longitudinal direction of the sub frame (7) immediately on the tipping frame (5), and a clamp drive (14) to move both container clamps (12) in opposite directions to and from each other for fixing frame beams (10) of a container (1) on the tipping frame (5) or the rails (13).

3. Container handling device according to claim 2, wherein each clamp (12) comprises a clamp body (15) and a hook (16), wherein each clamp body (15) comprises at a first side at least the notch (19) and the ridge (20) and wherein the rail (13) encloses the clamp body (15) at both sides and partly on the top of the clamp body (15) on both sides of the hook (16), and at the bottom.

4. The container handling device according to one of the preceding claims, wherein the sensor is a mechanical sensor that actuates a first valve and the first valve controls the container drive (8, 9) and/or the tipping drive (8, 9).

5. The container handling device according to claim 3 or to claim 3 and 4, wherein the clamp body (15) comprises at a second side a notch (23) and a ridge (22) and the rail (13) comprises a second sensor that is mounted in an opening (21) in the rail (13) to detect the notch (23) and the ridge (22) at the second side and possibly at the third side of the clamp body (15) there are further notches (23) and ridges (22) and a third sensor.

6. The container handling device according to claim 5, wherein the second sensor and/or the third sensor is a distance-detecting sensor such as an inductive sensor and wherein the sensor(s) preferably control(s) one or more indicator lights.

7. The container handling device according to one of the preceding claims, wherein the clamp (12) has at both ends thereof an attachment point (17) for connecting to the clamp drive (14).

8. The container handling device according to one of the preceding claims, wherein at least one of the container drive and the tipping drive comprises at least a hydraulic cylinder.

9. A vehicle having a chassis and a container handling device according to one of the preceding claims, wherein the sub frame is joined to the chassis.

## Patentansprüche

1. Vorrichtung zur Handhabung eines Containers für ein Fahrzeug, umfassend ein Untergestell (7), ein Kippgestell (5), das sich in Bezug auf das Untergestell (7) drehen lässt, einen Container-Antrieb (8, 9), zum Bewegen und Positionieren eines Containers (1), einen Kippantrieb (8, 9) zum Kippen des Kippgestells (5) in Bezug auf das Untergestell (7), wobei das Kippgestell (5) eine Schiene (13) umfasst, die quer zur Längsrichtung des Kippgestells (5) verläuft, und eine Container-Klemmbacke (12) zum Befestigen eines Containers (1) am Kippgestell (5), wobei sich die Klemmbacke (12) längs der Schiene (13) bewegen lässt, **dadurch gekennzeichnet, dass** die Klemmbacke (12) eine Vertiefung (19, 23) und eine Erhöhung (20, 22) umfasst, und die Schiene (13) eine Öffnung (18) umfasst, durch die ein Sensor eine Distanz zur Bestimmung der Nähe der Vertiefung (19, 23) oder der Erhöhung (20, 22) umfasst, wenn sich die Klemmbacke (12) an verschiedenen Positionen längs der Schiene (13) befindet, so dass die relative Position der Klemmbacke (12) und der Schiene (13) erfasst wird.

2. Vorrichtung zur Handhabung eines Containers nach Anspruch 1, worin die Container-Klemmbacke (12) eine erste Container-Klemmbacke ist, und wobei das Kippgestell (5) auch eine zweite Container-Klemmbacke umfasst, die eine entsprechenden Schiene (13) aufweist, wobei für jede Container-Klemmbacke (12) die Schiene (13) quer zur Längsrichtung des Untergestells (7) direkt auf dem Kippgestell (5) befestigt ist, sowie einen Klemmbackenantrieb (14), mit dem beide Container-Klemmbacken (12) in entgegengesetzten Richtungen aufeinander zu und voneinander weg bewegt werden, damit die Gestellträger (10) eines Containers (1) auf dem Kippgestell (5) oder den Schienen (13) befestigt werden.

3. Vorrichtung zur Handhabung eines Containers nach Anspruch 2, wobei jede Klemmbacke (12) einen Klemmbackenkörper (15) und einen Haken (16) umfasst, wobei jeder Klemmbackenkörper (15) an einer ersten Seite mindestens die Vertiefung (19) und die Erhöhung (20) umfasst, und wobei die Schiene (13) den Klemmbackenkörper (15) an beiden Seiten und teilweise an der Oberseite des Klemmbackenkörpers (15) beiderseits des Hakens (16) und auf der Unterseite umgibt.

4. Vorrichtung zur Handhabung eines Containers nach einem der vorhergehenden Ansprüche, wobei der Sensor ein mechanischer Sensor ist, der ein erstes Ventil betätigt, und das erste Ventil den Containerantrieb (8, 9) und/oder den Kippantrieb (8, 9) steuert.

5. Vorrichtung zur Handhabung eines Containers nach Anspruch 3 oder Anspruch 3 und 4, wobei der Klemmbackenkörper (15) an einer zweiten Seite eine Vertiefung (23) und eine Erhöhung (22) umfasst, und die Schiene (13) einen zweiten Sensor umfasst, der an einer Öffnung (21) in der Schiene (13) befestigt ist, mit dem die Vertiefung (23) und die Erhöhung (22) an der zweiten Seite erfasst werden, und möglicherweise befinden sich an der dritten Seite des Klemmbackenkörpers (15) weitere Vertiefungen (23) und Erhöhungen (22) sowie ein dritter Sensor.

6. Vorrichtung zur Handhabung eines Containers nach Anspruch 5, wobei der zweite Sensor und/oder der dritte Sensor ein Abstands-Messsensor, wie ein Induktionssensor, ist bzw. sind, und wobei der bzw. die Sensor(en) ein oder mehrere Indikatorleuchten steuert bzw. steuern.

7. Vorrichtung zur Handhabung eines Containers nach einem der vorhergehenden Ansprüche, wobei die Klemmbacke (12) an beiden Seiten davon einen Befestigungspunkt (17) zum Anschluss an den Klemmbackenantrieb (14) aufweist.

8. Vorrichtung zur Handhabung eines Containers nach einem der vorhergehenden Ansprüche, wobei mindestens einer von Container-Antrieb und Kippantrieb mindestens einen Hydraulikzylinder umfasst.

9. Fahrzeug mit einem Fahrgestell und einer Vorrichtung zur Handhabung eines Containers nach einem der vorhergehenden Ansprüche, wobei das Untergestell mit dem Fahrgestell verbunden ist.

## Revendications

1. Dispositif de manipulation de récipient pour un véhicule, comprenant un châssis de base (7), un châssis de basculement (5) qui est pivotant par rapport au châssis de base (7), des moyens d'entraînement de récipient (8, 9) pour déplacer et positionner un récipient (1), des moyens d'entraînement en basculement (8, 9) pour basculer le châssis de basculement (5) par rapport au châssis de base (7), où le châssis de basculement (5) comprend un rail (13) s'étendant transversalement par rapport à la direction longitudinale du châssis de basculement (5) et une griffe de récipient (12) pour attacher un récipient (1) au châssis de basculement (5), laquelle griffe (12) étant mobile le long le rail (13),
**caractérisé en ce que** la griffe (12) comprend une encoche (19, 23) et une arête (20, 22) et le rail (13) comprend une ouverture (18) à travers laquelle un capteur détecte une distance pour déterminer la proximité de l'encoche (19, 23) ou de l'arête 20,22) lorsque la griffe (12) est dans différentes positions le long le rail (13) afin de détecter la position relative de la griffe (12) et du rail (13).

2. Dispositif de manipulation selon la revendication 1, **caractérisé en ce que** la griffe de récipient (12) est une première griffe de récipient et **en ce que** le châssis de basculement (5) comprend également une seconde griffe de récipient et un rail (13) correspondant, pour chaque griffe de récipient (12), le rail (13) étant monté transversalement par rapport à la direction longitudinale du châssis de base (7) directement sur le châssis de basculement (5), et un entraînement de griffe (14) pour mouvoir les deux griffes de récipient (12) dans des directions opposées l'une de et vers l'autre pour fixer des poutres de châssis (10) d'un récipient (1) sur le châssis de basculement (5) ou les rails (13).

3. Dispositif de manipulation selon la revendication 2, **caractérisé en ce que** chaque griffe (12) comprend un corps de griffe (15) et un crochet (16), où chaque corps de griffe (15) comporte à un premier côté au moins l'encoche (19) et l'arête (20) et où le rail (13) enferme le corps de griffe (15) des deux côtés et en partie sur le dessus du corps de griffe (15) des deux côtés du crochet (16), et sur le dessous.

4. Dispositif de manipulation selon l'une des revendications précédentes, **caractérisé en ce que** le capteur est un capteur mécanique qui actionne une première vanne et la première vanne commande les moyens d'entraînement de récipient (8, 9) et/ou les moyens d'entraînement en basculement (8, 9).

5. Dispositif de manipulation selon la revendication 3 ou revendications 3 et 4, **caractérisé en ce que** le corps de griffe (15) comprend sur un deuxième côté une encoche (23) et une arête (22) et le rail (13) comporte un deuxième capteur qui est monté dans une ouverture (21) dans le rail (13) pour détecter l'encoche (23) et l'arête (22) au deuxième côté, et éventuellement sur le troisième côté du corps de griffe (15), il y a d'autres encoches (23) et arêtes (22) et un troisième capteur.

6. Dispositif de manipulation selon la revendication 5, **caractérisé en ce que** le deuxième capteur et/ou le troisième capteur est un capteur détecteur de distance tel qu'un capteur inductif et où le(s) capteur(s) commande(nt) de préférence une ou davantage de voyants lumineux.

7. Dispositif de manipulation selon l'une des revendications précédentes, **caractérisé en ce que** la griffe (12) présente à ses deux extrémités un point d'attache (17) pour l'attachement à l'entraînement de griffe (14).

8. Dispositif de manipulation selon l'une des revendications précédentes, **caractérisé en ce qu'**au moins un parmi le moyen d'entraînement de récipient et l'entraînement en basculement comprend un vérin hydraulique.

9. Véhicule avec un châssis et un dispositif de manipulation de récipient selon l'une des revendications précédentes, **caractérisé en ce que** le châssis de base est attaché au châssis.
